# EUROPEAN PATENT APPLICATION

(11) **EP 3 675 012 A1**
(43) Date of publication of application: **01.07.2020**
(21) Application number: 19220133.3
(22) Date of filing: 30.12.2019
(51) Int. Cl.: G06Q 10/10

(54) **APPLICATION MANAGEMENT SERVICE INCIDENT RESOLUTION METHOD**

(30) Priority: 31.12.2018 IN 201821050097
(71) Applicant: Atos Global IT Solutions and Services Private Limited, 400708 Maharashtra (IN)
(72) Inventor: SEN, Rudreshwar, 560048 Bengaluru, District: Bengaluru, Karnataka (IN); RAO, Prashant, 560048 Bengaluru, District: Bengaluru, Karnataka (IN)
(74) Representative: Vigand, Régis Louis Michel

(57) **Abstract**

This invention relates to an application management service incident resolution method comprising, for at least a first category of complex incidents: selecting, from a library, an incident resolution workflow which is relevant for a given specific complex incident having occurred and which comprises a succession of activities: said activities being categorized as either automated or manual, automated activities proposing at least one or more robotic process automation agents and/or one or more automation scripts to be activated by user, manual activities proposing at least one or more contextual video clips to be displayed by user, performing effective incident resolution: by user at least selecting and combining, preferably and/or preferably amending and/or preferably adding and/or preferably removing, at least part of said activities among said succession of activities, said automated activity(ies) or part of them being simply activated by user, said manual activity(ies) being manually performed by user based on at least said one or more contextual video clips teaching(s), this effective incident resolution performance, if successful, being possibly converted to a new alternative incident resolution workflow then included in said library.

## Description

### FIELD OF THE INVENTION

The invention relates to the technical field of application management service incident resolution methods.

### BACKGROUND OF THE INVENTION

Application management service is the process of managing the operation, maintenance, versioning and upgrading of an application throughout its lifecycle. Application management service includes best practices, techniques and procedures, all useful and interesting for deploying application's optimal operation, performance and efficiency, throughout the enterprise and back-end IT (information technology) infrastructure. Application management service is an ongoing operation unlike application development, which is a "one time" activity.

The application's owner often builds new applications for its customers or users, using either their internal developers or through an application development service provider, which builds the application for this owner.

Once the application is deployed and made operational and accessible to their customers or their users, the application needs to be kept operational, which includes fixing technical issues, adding new capabilities that may be required from time to time, ensuring the application is secure, performs according to plans, and is available to its customers during planned hours of services (24 hours a day the whole week, or 8 hours a day only on working days, etc.... , depending on the kind of application and on the type of target customers). The application infrastructure also needs to be maintained, which includes upgrading the infrastructure, keeping it free from malware, applying patches for the operating system as well as other software the application may be using.

Enterprises often have several such applications. The application's owner may engage its own employees to manage these applications, or as is more prevalent, especially for enterprises whose core area of business is not IT, outsource the application management to an IT services company.

An incident is an unexpected event that disrupts the normal operation of an IT service. A problem is an underlying issue that could lead to an incident. IT incident management helps keeping an organization prepared for unexpected hardware, software and security failings, and it reduces the duration and severity of disruption which are the consequences of these events. It can follow an established ITSM (Information Technology Service Management) framework based on a combination of guidelines and best practices established over time.

IT incident management is normally separated into three levels of support, generally grouped together in the help or service desk. Organizations often use a support system, such as a ticketing system, for categorization and prioritization of incidents. IT staff responds to each incident according to its prioritization level.

"Level-one" support typically provides basic level support or assistance, such as password resets or computer troubleshooting. "Level-one" support involves incident identification, logging, prioritization and categorization, deciding to escalate to "level-two" support and incident resolution when appropriate. "Level-two" support goes through a similar process for more complex issues that need more training, skill or security access to complete. Major incidents are given to "level-three" support. This category includes incidents that disrupt a business's operation, marked as a high priority, and require an immediate response. Such an example of "level-three" incident would be an issue with a network that requires an expert or a skilled team to solve.

Incident resolution automation applies to documenting application management service processing of complex incidents that disrupt normal operations of IT services.

Complex incidents resolution process is largely unstructured and related knowledge clustered with few "level-two" or "level-three" high cost consultants. Productivity and knowledge transition risks are high with such people dependent processes.

Incidents by nature are complex and include lot of subtle variations even between similar incidents. There processes are often documented in silos and involve people dependency to execute resolution steps like following activities across application modules and preforming activities of type verification, diagnostic and resolution. Sequences of these activities vary, based on outcome of prior step, and manual intervention is required to select best possible resolution path. Commonly not all activities needed to resolve an incident can be automated, in particular due to the existence of asynchronous activities.

Incident resolution cannot be fully automated end to end due to complex processes, subtle variations between requests, and the need for asynchronous manual activities, and hence standard RPA (robotic process automation) based automation cannot always be used for solving all types of incidents or for solving all parts of a specific incident.

Additional issues are the availability of knowledge in tacit form with few expensive engineers, risk of loss of knowledge due to attrition or during transitions, non-availability of incident resolution knowledge in a structure that helps training new members in the application management service team, and as described above, the difficulty in automating the process with conventional tools like RPA or scripts.

### SUMMARY OF THE INVENTION

The object of the present invention is to alleviate at least partly the above mentioned drawbacks.

More particularly, the invention aims at improving the compromise between on the one side, the simplicity of the bricks to manufacture, and on the other side the modularity of these bricks, so that most of the manufactured bricks can be combined in more than one, and more particularly in many workflows then used to solve incidents.

Indeed, in an application management service incident resolution method, either the incident is simple and there may exist a dedicated effective method to solve it, or the incident is complex and often the dedicated method which may exist is either incomplete or ineffective.

For a complex incident to be solved, two different improvements may be offered:
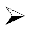 first, there may be many elements of information widespread that would need to be gathered and proposed to the user in a synthetized way,
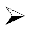 second, in order to solve a complex incident which resolution is hard to automate, support may be offered to the user even for performance of manual activities so as to make such resolution quicker and more effective.

However, such a compromise between effectiveness of incident resolution and level of helping support to user is rather hard to achieve, because for complex incidents, automation is hard to achieve and sole support through entirely manual activities is expensive and time consuming.

Therefore, according to the invention, an incident resolution starts from a proposed workflow having worked for a complex incident which presents similarities with the new complex incident to solve.

This proposed workflow is split into different types of activities, so as to make easier the way to optimize differently from one another the different required activities:
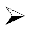 some activities being automated to solve some parts of this complex incident in an automated way, both simple and effective,
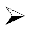 while other activities being kept manual, because too hard to automate with an effective result, but the helping support offered to user is made the closest possible to an automated way, for instance with the help of at least one contextual video making it the easiest way for the user to understand how to develop a manual activity to solve each of these parts which cannot be reasonably automated.

Each new successive workflow, built from this combination of automated activities and manual activities supported by video help, is then added to the available set of workflows to enrich a library

Therefore, according to the invention, a good compromise, between simplicity of use and effectiveness of result, is to be found with the method claimed in claim 1, thereby also possibly enriching in the course of time the library of existing workflows.

Indeed, a system is provided for application management service incident resolution which embeds useful and simple bricks easily reusable and easily combinable together so as to make this system quite modular in order to create new workflows or improve existing workflows easily from those bricks, the cement possibly still needed being a little part of the global workflow.

This object is achieved with an application management service incident resolution method comprising, for at least a first category of complex incidents: selecting, from a library, an incident resolution workflow which is relevant for a given specific complex incident having occurred and which comprises a succession of activities: said activities being categorized as either automated or manual, automated activities proposing at least one or more robotic process automation agents and/or one or more automation scripts to be activated by user, manual activities proposing at least one or more contextual video clips to be displayed by user, performing effective incident resolution: by user at least selecting and combining, preferably and/or preferably amending and/or preferably adding and/or preferably removing, at least part of said activities among said succession of activities, said automated activity(ies) or part of them being simply activated by user, said manual activity(ies) being manually performed by user based on at least said one or more contextual video clips teaching(s), this effective incident resolution performance, if successful, being possibly converted to a new alternative incident resolution workflow then included in said library.

Embodiments of the invention indeed provide for one or more among following benefits:
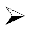 to improve effectiveness and efficiency of knowledge transition with automated knowledge article creation,
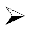 to reduce knowledge attrition risks by capturing small and medium sized enterprises knowledge in intelligent data lake and machine learning based recommenders,
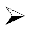 to get better visibility into application flows and dependencies, by automated discovery of entities using AIAP (Atos intelligent automated platform) possibly enriched by small and medium sized enterprises,
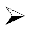 to provide a mechanism for partially automating the resolution of incidents by applicable means such as scripts or robotic process automation (RPA) agents,
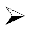 to create high quality and intelligent data lake which can be helpful in tracking process performance, and to identify opportunities for process optimization and re-engineering.

Preferred embodiments comprise one or more of the following features, which can be taken separately or together, either in partial combination or in full combination.

Preferably, said effective incident resolution performance includes at least manual activities including, as a whole, several contextual video clips.

The breakdown of the effective incident resolution into several different manual activities globally based on several contextual video clips allows for making these manual activities more easily reusable, therefore making more modular the whole application management service incident resolution method proposed by the invention.

Preferably, said effective incident resolution performance also includes at least automated activities including, as a whole, several robotic process automation agents and/or several automation scripts.

The breakdown of the effective incident resolution into several different automated activities globally based on several robotic process automation agents and/or automation scripts allows for making these automated activities more easily reusable, therefore making more modular the whole application management service incident resolution method proposed by the invention.

Preferably, said manual activities also proposing at least one or more text documents and/or one or more images and/or one or more links and/or one or more audio documents.

Hence, if all parts of support required by user cannot be proposed in an optimal contextual video, then some parts of it may be proposed through less optimistic but still useful way.

Preferably, said automated activities also proposing at least one or more contextual video clips to be displayed by user, and/or at least one or more text documents and/or one or more images and/or one or more links and/or one or more audio documents, so as to allow user to check relevance of such automated activities.

Hence, even for automated activities, despite automated performance by simple click, helping support can still be added, to help user understand not only how this automated activity works but also if this automated activity is relevant to help user solving present incident.

Preferably, the application management service incident resolution method also comprises, for at least a second first category of simple incidents: selecting, from said library, an incident resolution workflow which is relevant for a given specific simple incident having occurred and which comprises a succession of activities being categorized only as automated activities proposing at least one or more robotic process automation agents and/or one or more automation scripts to be activated by user, performing effective incident resolution by user at least selecting and combining, preferably and/or preferably amending and/or preferably adding and/or preferably removing, at least part of said activities among said succession of said automated activity(ies) or part of them being simply activated by user, this effective incident resolution performance, if successful, being possibly converted to a new alternative incident resolution workflow then included in said library.

Hence, the proposed application management service incident resolution method may propose alternative solutions for other categories of incident, quicker and simpler for simpler incidents.

Preferably, the application management service incident resolution method also comprises, for at least a third category of simple and/or complex incidents: selecting, from said library, an incident resolution workflow which is relevant for a given specific incident having occurred and which comprises a succession of activities being categorized as only manual activities proposing at least one or more contextual video clips to be displayed by user and/or one or more text documents and/or one or more images and/or one or more links and/or one or more audio documents, performing effective incident resolution: by user at least selecting and combining, preferably and/or preferably amending and/or preferably adding and/or preferably removing, at least part of said activities among said succession of manual activity(ies) being manually performed by user based on at least said one or more contextual video clips teaching(s) and/or other support, this effective incident resolution performance, if successful, being possibly converted to a new alternative incident resolution workflow then included in said library.

Hence, the proposed application management service incident resolution method may propose alternative solutions for other categories of incident, less easy to use but still useful for incidents which resolution is harder to automate or has not yet been done.

Preferably, the application management service incident resolution method also comprises, for at least a third category of simple and/or complex incidents: no selection is made from said library of any incident resolution workflow which is relevant for a given specific incident having occurred, but, separated additions are performed from scratch by user of one or more among activities being categorized as either automated or manual, automated activities proposing at least one or more robotic process automation agents and/or one or more automation scripts to be activated by user, manual activities proposing at least one or more contextual video clips to be displayed by user, at least one or more text documents and/or one or more images and/or one or more links and/or one or more audio documents, performing effective incident resolution: by user at least selecting and combining, preferably and/or preferably amending and/or preferably adding and/or preferably removing, at least part of said activities among said succession of activities, said automated activity(ies) or part of them being simply activated by user, said manual activity(ies) being manually performed by user, this effective incident resolution performance, if successful, being possibly converted to a new original incident resolution workflow then included in said library.

Hence, the proposed application management service incident resolution method may also propose only bricks of solutions for other categories of incident, when no existing workflow is available, so as to start building workflows for corresponding categories of incidents.

Preferably, this effective incident resolution performance, if successful, is converted to a new alternative incident resolution workflow and is then included in said library.

Therefore, according to the invention, a good compromise, between simplicity of use and effectiveness of result, is to be found with the method claimed in claim 1, thereby also enriching in the course of time the library of existing workflows.

Preferably, this effective incident resolution performance, if successful, is used to amend and improve one or more incident resolution workflows already existing in said library, via self-learning.

Hence, in the library, not only can new workflows be added, but also existing workflows can be improved.

Preferably, said library is integrated in a knowledge data lake also including one or more of: process document(s), and/or FAQ(s), and/or known error databases, and/or knowledge articles, and/or ticket dumps, and/or operational data.

Hence, the library is structured so as to be more easily searchable by user, thereby being more effective in the obtained result, as well as being more attractive to the user.

Preferably, said one or more contextual video clips are recorded by using a recorder recording user activity through click stream data and/or screen images.

Hence, adding such a video clip to an existing workflow or building a new workflow with adding to it at least such a video clip, becomes much easier, and therefore enrichment of existing library will grow at a quicker pace.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows a first screen capture representing a view of an example of the knowledge builder, according to an embodiment of the invention.
Fig. 2 shows a second screen capture representing a view of an example of workflow in an incident resolution workbench, according to an embodiment of the invention.
Fig. 3 shows a third screen capture representing an example of a step adding a given robotic process automation to a given automated activity in a workflow, according to an embodiment of the invention.

### DETAILED DESCRIPTION OF THE INVENTION

Incident resolution automation enables automatic capture of multi-dimensional knowledge from "level-two" or "level-three" intelligent transformation to structured process flow and embed knowledge items, like RPA, videos, KB (knowledge builder), recommendations, and others, at process or activities level for use by other "level-two" or "level-three" consultants and helps to convert tacit knowledge into documented and structured knowledge of an application management service process, which is accessible to the team on demand.

In a first step, knowledge capture is performed. "Level-two" and "Level-three" consultants working on complex incidents use a "Windows" (registered trademark) based utility called PSR (problem step recorder) to record the user activity in the form of click stream data plus the screen images. Along with the PSR recordings the user can also records the steps using recording facility of the audio and/or video recorder.

In a second step, knowledge builder component is used to upload the recorded PSR file and create a knowledge article. The consultants selects the recorded PSR file and triggers the knowledge builder workflow to extract PSR content which is converted into knowledge article and incident resolution workflow comprising of activities and steps and related knowledge items.

In a third step, categorization and cleaning of PSR content are carried out using natural language processing (NLP) and Machine Learning (ML) techniques. Created knowledge article is then uploaded into knowledge repository of a service management tool.

In a fourth step, during the incident resolution process, the consultant searches for a knowledge article in a service management tool. The consultant can then open the incident resolution workbench from the knowledge article to view the activities and steps needed to be executed for the resolution of the incident.

Incident resolution workbench enables consultants to view and execute the solution workflow using knowledge items like recommendations, automation scripts and RPA based automations, video recording, transcripts, useful links and documents, among others. "Level-two" and "Level-three" expert engineers can add these knowledge articles or automation scripts, which can then make it simpler for less skilled engineers to resolve complex incidents with the help of these artefacts.

The entire solution workflow is decomposed into activities and steps. While creating the workflows, all activities are categorized either as automated or as manual. In the automated activities, "Level two" and "Level three" consultants can invoke RPA agents, or other supported automation scripts, by clicking on the linked icons. In the manual activities, the consultants can use contextual video clips to understand the details in this incident resolution process.

Since given similar incidents resolutions have a certain degree of variation, the solution proposed by embodiments of the invention allows agents to create variations of the workflow, where the consultants can add or remove certain activities or steps to create an alternative workflow. The solution captures all activity level feedback and uses it to perform self-learning and to improve knowledge articles.

The solution provides for machine learning based recommender system to recommend automations, which can be categorized as diagnostic, verification and resolution, at an activity and process level. The system is built on self-learning techniques and becomes smarter as it collects data on system usage and user level feedback to improve recommendations.

In a fifth and final step, focus is made on the process mining activities. An intelligent knowledge lake is used for SMART (self-monitoring, analysis, and reporting technology) analytics, machine-learning based co-relation, recommendations and is taken as a base for organization knowledge graph. Most of user activities in incident resolutions using the workbench are recorded in the data lake, along with numerous other artefacts such as process documents, FAQs (frequently asked questions), knowledge articles, ticket dumps, etc...

These insights help the service delivery managers to monitor and improve productivity and efficiency of incident resolutions.

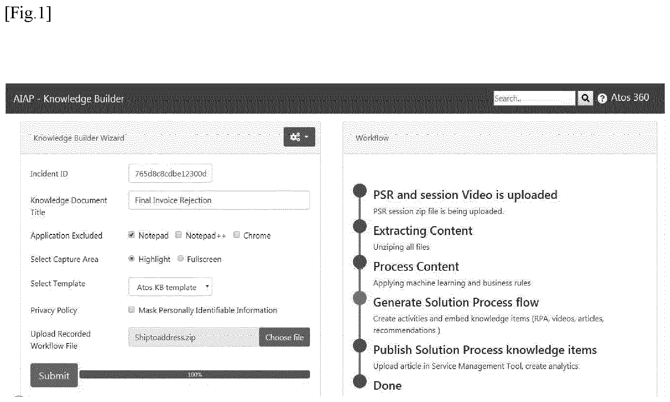

Fig. 1 shows a first screen capture representing a view of an example of the knowledge builder, according to an embodiment of the invention.

This shows the different and successive steps of a given workflow building in the right part of figure 1. This shows the different fields of information related to a given workflow which helps characterizing and referencing a given workflow in the library. PSR (problem step recorder) is a "Windows" (registered trademark) utility in "Microsoft Outlook" (registered trademark) allowing for recording videos.

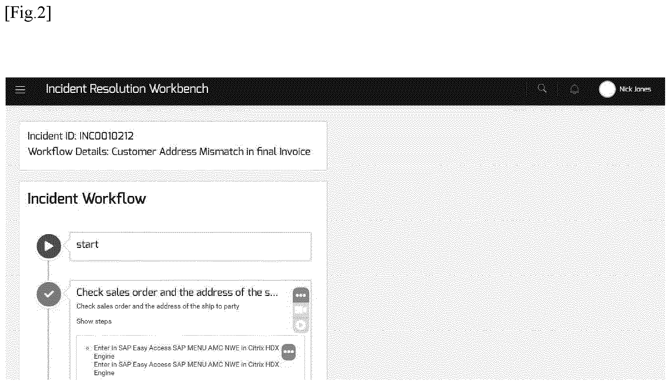

Fig. 2 shows a second screen capture representing a view of an example of workflow in an incident resolution workbench, according to an embodiment of the invention.

Here, a first activity of the workflow is detailed with specific steps with helps to perform those specific steps, including video (represented by the small camera icon). Of course, the workflow also contains numerous other such activities and steps which here are not represented, for sake of clarity.

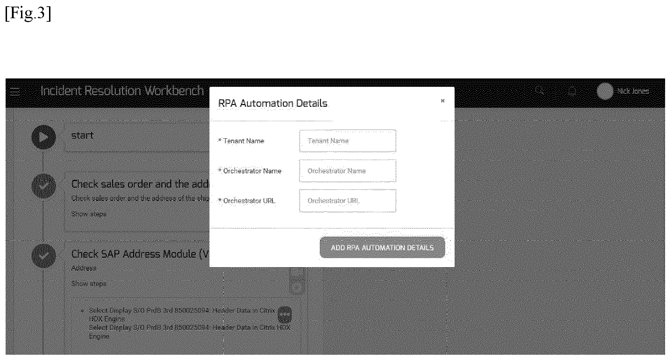

Fig. 3 shows a third screen capture representing an example of a step adding a given robotic process automation to a given automated activity in a workflow, according to an embodiment of the invention.

Here, specific robotic process automation is identified so as to be attached to a specific step of an automated activity of the workflow. This specific robotic process automation is identified with the help of a "pop up" window.

The invention has been described with reference to preferred embodiments. However, many variations are possible within the scope of the invention.

## Claims

1. Application management service incident resolution method comprising, for at least a first category of complex incidents:
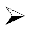 selecting, from a library, an incident resolution workflow which is relevant for a given specific complex incident having occurred and which comprises a succession of activities:
∘ said activities being categorized as either automated or manual,
▪ automated activities proposing at least one or more robotic process automation agents and/or one or more automation scripts to be activated by user,
▪ manual activities proposing at least one or more contextual video clips to be displayed by user,
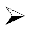 performing effective incident resolution:
∘ by user at least selecting and combining, preferably and/or preferably amending and/or preferably adding and/or preferably removing, at least part of said activities among said succession of activities,
▪ said automated activity(ies) or part of them being simply activated by user,
▪ said manual activity(ies) being manually performed by user based on at least said one or more contextual video clips teaching(s),
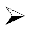 this effective incident resolution performance, if successful, being possibly converted to a new alternative incident resolution workflow then included in said library.

2. Application management service incident resolution method according to claim 1, wherein:
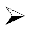 said effective incident resolution performance includes at least:
∘ manual activities including, as a whole, several contextual video clips.

3. Application management service incident resolution method according to claim 2, wherein:
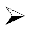 said effective incident resolution performance also includes at least:
∘ automated activities including, as a whole, several robotic process automation agents and/or several automation scripts.

4. Application management service incident resolution method according to any of preceding claims, wherein:
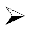 said manual activities also proposing at least one or more text documents and/or one or more images and/or one or more links and/or one or more audio documents.

5. Application management service incident resolution method according to any of preceding claims, wherein:
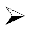 said automated activities also proposing at least one or more contextual video clips to be displayed by user, and/or at least one or more text documents and/or one or more images and/or one or more links and/or one or more audio documents, so as to allow user to check relevance of such automated activities.

6. Application management service incident resolution method according to any of preceding claims, wherein it also comprises, for at least a second first category of simple incidents:
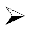 selecting, from said library, an incident resolution workflow which is relevant for a given specific simple incident having occurred and which comprises a succession of activities being categorized only as automated activities proposing at least one or more robotic process automation agents and/or one or more automation scripts to be activated by user,
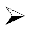 performing effective incident resolution by user at least selecting and combining, preferably and/or preferably amending and/or preferably adding and/or preferably removing, at least part of said activities among said succession of said automated activity(ies) or part of them being simply activated by user,
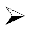 this effective incident resolution performance, if successful, being possibly converted to a new alternative incident resolution workflow then included in said library.

7. Application management service incident resolution method according to any of preceding claims, wherein it also comprises, for at least a third category of simple and/or complex incidents:
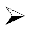 selecting, from said library, an incident resolution workflow which is relevant for a given specific incident having occurred and which comprises a succession of activities being categorized as only manual activities proposing at least one or more contextual video clips to be displayed by user and/or one or more text documents and/or one or more images and/or one or more links and/or one or more audio documents,
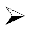 performing effective incident resolution:
∘ by user at least selecting and combining, preferably and/or preferably amending and/or preferably adding and/or preferably removing, at least part of said activities among said succession of manual activity(ies) being manually performed by user based on at least said one or more contextual video clips teaching(s) and/or other support,
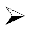 this effective incident resolution performance, if successful, being possibly converted to a new alternative incident resolution workflow then included in said library.

8. Application management service incident resolution method according to any of preceding claims, wherein it also comprises, for at least a third category of simple and/or complex incidents:
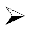 no selection is made from said library of any incident resolution workflow which is relevant for a given specific incident having occurred,
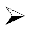 but, separated additions are performed from scratch by user of one or more among activities being categorized as either automated or manual,
▪ automated activities proposing at least one or more robotic process automation agents and/or one or more automation scripts to be activated by user,
▪ manual activities proposing at least one or more contextual video clips to be displayed by user, at least one or more text documents and/or one or more images and/or one or more links and/or one or more audio documents,
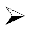 performing effective incident resolution:
∘ by user at least selecting and combining, preferably and/or preferably amending and/or preferably adding and/or preferably removing, at least part of said activities among said succession of activities,
▪ said automated activity(ies) or part of them being simply activated by user,
▪ said manual activity(ies) being manually performed by user,
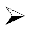 this effective incident resolution performance, if successful, being possibly converted to a new original incident resolution workflow then included in said library.

9. Application management service incident resolution method according to any of preceding claims, wherein:
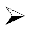 this effective incident resolution performance, if successful, is converted to a new alternative incident resolution workflow and is then included in said library.

10. Application management service incident resolution method according to any of preceding, wherein:
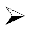 this effective incident resolution performance, if successful, is used to amend and improve one or more incident resolution workflows already existing in said library, via self-learning.

11. Application management service incident resolution method according to any of preceding claims, wherein:
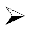 said library is integrated in a knowledge data lake also including one or more of:
∘ process document(s),
∘ and/or FAQ(s),
∘ and/or known error databases,
∘ and/or knowledge articles,
∘ and/or ticket dumps,
∘ and/or operational data.

12. Application management service incident resolution method according to any of preceding claims, wherein:
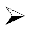 said one or more contextual video clips are recorded by using a recorder recording user activity through click stream data and/or screen images.
